# EUROPEAN PATENT SPECIFICATION

(11) **EP 1 064 090 B1**
(45) Date of publication and mention of the grant of the patent: **24.09.2003**
(21) Application number: 99912761.6
(22) Date of filing: 17.03.1999
(51) Int. Cl.: B01J 19/00

(54) **DEVICE FOR ANALYZING A SAMPLE**
VORRICHTUNG ZUM ANALYSIEREN EINER PROBE
DISPOSITIF POUR ANALYSER UN ECHANTILLON

(30) Priority: 17.03.1998 US 40498
(43) Date of publication of application: 03.01.2001
(73) Proprietor: Cepheid, Sunnyvale, CA 94089 (US)
(72) Inventor: NORTHRUP, M., Allen, Berkeley, CA 94708 (US); PETERSEN, Kurt, E., San Jose, CA 95148 (US); McMILLAN, William, A., Cupertino, CA 95014 (US); KOVACS, Gregory, T., A., Stanford, CA 94305 (US)
(74) Representative: HOFFMANN - EITLE
(86) International application number: US9906150
(87) International publication number: WO99047255

(56) References cited:
- WO-A-96/04547
- WO-A-97/06437
- US-A- 4 756 884
- US-A- 5 415 841
- US-A- 5 646 039
- US-A- 5 726 026
- BURNS M A ET AL: "MICROFABRICATED STRUCTURES FOR INTEGRATED DNA ANALYSIS" PROCEEDINGS OF THE NATIONAL ACADEMY OF SCIENCES OF USA., vol. 93, 1 May 1996 (1996-05-01), pages 5556-5561, XP002058000 NATIONAL ACADEMY OF SCIENCE. WASHINGTON., US ISSN: 0027-8424

## Description

### FIELD OF THE INVENTION

The present invention relates generally to the field of chemical processing, and in particular to an integrated device for analyzing a fluid sample.

### BACKGROUND OF THE INVENTION

There are many applications in the field of chemical processing in which it is desirable to separate chemical components prior to or after reacting chemicals. Examples of reactions requiring separation of components include organic, inorganic, biochemical, and molecular reactions. Examples of chemical reactions include thermal cycling amplification, such as polymerase chain reaction (PCR), ligase chain reaction (LCR), isothermal nucleic acid amplification, self-sustained sequence replication, enzyme kinetic studies, homogeneous ligand binding assays, affinity binding assays, and more complex biochemical mechanistic studies. Conventional separation techniques include electrophoresis, such as capillary electrophoresis, synchronized cyclic electrophoresis, and free flow electrophoresis. Conventional separation techniques also include isoelectric focusing (IEF), hybridization, liquid and gas chromatography, molecular sieving and filtering.

Components to be separated in various samples include nucleic acids, amino acids, peptides, proteins, cells, viruses, bacteria, organic compounds, carbohydrates, etc. For example, in amplification applications, multiple oligonucleotide primers and probes designed for many organisms can be used to multiply DNA from numerous organisms in a sample. After amplification, separation techniques such as electrophoresis or IEF can be employed to separate the amplification products by certain properties, such as molecular weight, for subsequent detection by fluorescence methods.

Of increasing interest in the field of chemical separation is the use of devices that include an integrated reaction chamber and separation region. Such integrated devices provide a number of advantages over conventional devices in which one transfers a fluid sample between a reaction apparatus and a separation device. For example, where the chemical reaction and separation steps are performed in a single integrated device, one may avoid contamination and crossover of sample or reaction products. In addition, an integrated device may allow for substantially faster sample processing and analysis.

Recent efforts to integrate processing and analytical functionalities in a single device, especially in the field of MEMS, microfabrication, and microfluidics, have resulted in the development of devices that include multiple substrates bonded together. The substrates are usually bonded with adhesives, or by heat sealing, fusion bonding, or anodic bonding. These multi-substrate devices typically include a reaction chamber that is connected to a separate separation component, such as a capillary tube containing a suitable electrophoresis gel, by an adhesive such as epoxy. Alternatively, these multi-substrate devices have reaction chambers and separation channels etched into a plate and a cover bonded over top of the plate. For example, U.S. Patent 5,849,208 issued to Hayes et al. discloses such a multi-substrate device.

These multi-substrate devices have many disadvantages. First, the uniformity between devices is often compromised during bonding of the substrates. Second, mass production of the multi-substrate devices is costly, labor intensive, difficult to automate, and therefore impractical. For example, when applying adhesives such as epoxy, isolating the epoxy to only specific areas is difficult to implement and to control on a production basis, especially where the device includes small microchannels. Furthermore, adhesives may allow for leaks and add to the cost of the device.

Moreover, current integrated devices provide for only limited control of fluid between reaction and separation regions. For example, high internal pressure can develop in a reaction chamber due to the thermal expansion of liquid or gas present in this region, the generation of gas bubbles, or the chemical reactions performed inside of the chamber. This pressure, combined with any elevated temperatures within the chamber, can have detrimental effects on fluidic components and performance upstream and downstream from the reaction chamber. A particular problem is the flow or diffusion of chemicals from the reaction chamber into unwanted regions caused by the elevated pressure or temperature. This situation is especially problematic when sensitive detection methods and apparatus are located downstream from the reaction chamber.

A further problem with prior integrated devices is that when the reaction chamber is heated to perform a chemical reaction, the separation region is also heated due to thermal conduction. If the separation region is heated, however, the separation material contained in the region, e.g., electrophoresis gel, degrades and renders the device inoperable. In addition to degrading the separation material, the thermal conduction between the reaction chamber and separation region causes large thermal gradients within the device and prevents adequate heating of a sample in the reaction chamber.

Moreover, where the separation region requires electrodes, as in capillary electrophoresis, micro-electrophoresis, and IEF, there are many issues that have not been addressed by prior art designs. Much of the prior art has focused on issues regarding the design, fabrication, and operation of the capillary channel itself. In contrast, the design of the electrodes which are in contact with the fluid, and which are responsible for the electrokinetic movement of the fluid, has not yet been adequately addressed. The correct design of these electrodes is necessary for the proper, practical, and cost-effective implementation of high-volume, disposable systems that incorporate both reaction chambers and separation regions in a single device. Current state-of-the-art is to incorporate large, open reservoirs (100 µL or more) near the end of each capillary channel, and then "dip" a separate metal electrode into each open reservoir. Such a crude arrangement is unsuitable for mass production of disposable assemblies. Furthermore, external electrodes, which are placed in contact with the fluid in the disposable assembly, are generally not practical because they may need to be cleaned or otherwise "prepared" prior to each use.

### SUMMARY

The present invention provides an integrated reaction and separation device that overcomes the disadvantages of the prior art discussed above. In particular, the integrated device of the present invention avoids the use of inconvenient bonding techniques, enabling inexpensive, high-volume production of the device. Additionally, the integrated device includes a reaction chamber that is thermally isolated from the separation region, thereby enabling proper heating of a sample without degrading the separation region.

The device may comprise a unitary body, preferably a molded polymeric part, having formed therein a reaction chamber for chemically reacting a sample, a separation region for separating components of the sample, and a transition region connecting the reaction chamber to the separation region. The reaction chamber, transition region, and separation region are formed in and enclosed by the unitary body. Additionally, the transition region includes at least one flow restrictor for controlling the flow of fluid between the reaction chamber and the separation region. Further, the portion of the unitary body defining the transition region has lower thermal conduction than the portion of the body defining the reaction chamber so that the transition region substantially thermally isolates the reaction chamber from the separation region.

The unitary body may be surrounded by external, functional components such as differential pressure sources, electro-motive sources, heaters, light sources, and optical detectors. In the preferred embodiment, the reaction chamber is an amplification chamber for amplifying nucleic acid in the sample. Also in the preferred embodiment, the separation region comprises an electrophoresis column or capillary containing a suitable matrix material, such as electrophoresis gel or buffer, for separating nucleic acid fragments in the sample.

A more complete understanding of the present invention may be gained upon consideration of the following description and the accompanying drawings.

### BRIEF DESCRIPTION OF THE DRAWINGS

- Fig. 1: is a schematic view of a unitary processing device having an integrated reaction chamber, transition region, and capillary electrophoresis separation region according to one embodiment of the present invention.
- Fig. 2: is a schematic view of another processing device having an integrated reaction chamber, transition region, and hybridization separation region according to a second embodiment of the present invention.
- Figs. 3 A, B, C, D, E: are schematic views of several variations of the transition regions connecting a reaction chamber and separation region according to the present invention. Fig. 3A shows a constrictor in the transition region. Fig 3B shows a two-way valve. Figs. 3C and 3D show multiple two-way valves with an inlet channel. Fig. 3E shows a three-way valve.
- Fig. 4 A: is a plan view of an exemplary mechanical valve according to the present invention.
- Fig. 4B: is a cross-sectional view of the valve of Fig. 4A.
- Fig. 5: is a perspective view of a chemical reaction and separation device according to a third embodiment of the invention.
- Fig. 6: is a schematic view of another chemical reaction and separation device according to a fourth embodiment of the present invention.

### DETAILED DESCRIPTION

The present invention provides an integrated device for the processing of a fluid sample. The device comprises a reaction chamber, a product separation region, and a fluid transition region connecting the reaction chamber to the separation region. The reaction chamber, transition region, and separation region may be formed in and enclosed by a single unitary body, preferably a molded piece of polymeric material. The term "unitary" is herein intended to mean that the body of the device that forms the reaction chamber, transition region, and separation region is a single piece of material. This unitary design enables inexpensive, mass production of the device.

In operation, a fluid sample is moved from one region to another and the sample flow is controlled between regions. There may be more than one reaction chamber, transition region, or separation region in a single integrated device. Also provided is a device as described having one or more electrodes embedded in the body adjacent to one or more of the regions. The electrodes may be in dry or coated form. The body of the device may be surrounded by external, functional components such as electro-motive sources, heaters, light sources, and optical detectors. The device may also be a component of a larger system, for example, a fluid flow cartridge that has other chemical processing functionalities. Such a cartridge is described in co-pending patent application PCT/US98/27632 filed December 24, 1998 the disclosure of which is incorporated by reference herein.

The body may be a polymer, ceramic, or other material that permits the molding of chambers and channels directly into the material. The body may be of various shapes and sizes. The internal network of chambers and channels may be macro, meso or micro scale size, or a combination thereof. For example, the device may include a macro scale reaction chamber which leads to a microchannel transition region and separation region. In general, the integrated device of the present invention includes one or more reaction chambers in fluidic communication with one or multiple separation regions through one or more transition regions. A variety of combinations of chambers, transition regions, and separation regions are intended to be within the scope of the invention. For example, a separation region may precede a reaction chamber and/or lead from the chamber. Also, multiple separation regions may be connected in series or in parallel. These separation regions may be of assorted types, each providing different separating functions. For example, a reaction chamber may lead through a transition region to a hybridization site which in turn leads to an electrophoresis channel.

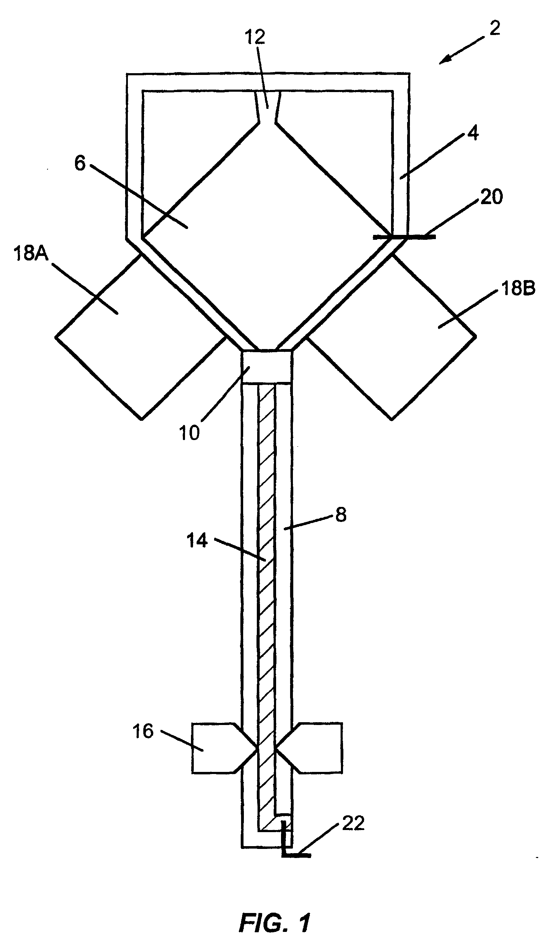

Fig. 1 shows one embodiment of a processing device **2** formed by a unitary body **4**. The body **4** has formed therein a reaction chamber **6**, a separation region **8**, and a transition region **10** connecting the reaction chamber to the separation region. The reaction chamber **6** has an inlet port **12** for adding sample and reagents as required by the particular reaction performed in the chamber. The device **2** may include an outlet port as well as the inlet port **12**. The ports may serve to connect the device to an external pump, vacuum source, or syringe. Alternatively, the ports may function as vents. In this embodiment, the separation region **8** is a capillary electrophoresis tube **14** containing appropriate separation material, e.g. electrophoresis gels or polymers, for separating components of the sample. Such separation materials are well known in the art.

The integrated device **2** also includes an injection electrode **20** and a separation electrode **22** embedded in the unitary body **4**. The electrodes **20** and **22** are located at opposite ends of the device to drive electrophoretic, electro-osmotic, or IEF ion flow through the separation region **8**. Each electrode is preferably embedded in the body **4** such that one end of the electrode protrudes through an external surface of the body and such that the other end of the electrode protrudes into an internal region of the body.

In a preferred embodiment, the device **2** is used in combination with and designed to be inserted into an external instrument (not shown) having a heater for heating the reaction chamber **6** and having electrical connections for applying a voltage difference between the electrodes **20**, **22**. The instrument may optionally include an optical detector **16** for detecting separated components of the sample in separation region **8**. Additionally, the instrument may include a pair of optics assemblies **18A, 18B** for monitoring the reaction chamber **6**. Suitable optics assemblies for use with the device of the present invention are disclosed in U.S. application Ser. No. 09/081,260 filed May 19, 1998 the disclosure of which is incorporated by reference herein.

The reaction chamber **6** is designed for the particular process being performed, such as PCR, LCR, isothermal nucleic acid amplification, self-sustained sequence replication, enzyme kinetic studies, homogenous ligand binding assays, affinity binding assays, chemical or temperature mediated lysis of target microorganisms, more complex biochemical mechanistic studies, the study of certain physiologic process and other synthetic and ligand binding processes. The volume capacity of the chamber depends on its application. In a preferred embodiment, for PCR applications, the chamber has a volume capacity between about 10 to 100 microliters. Thermal energy may be supplied to the reaction chamber **6** by coupling the portion of the body **4** forming the chamber to an external heater. Alternatively, a heating element may be permanently coupled to the body using screen-printing or thin-film depositing techniques.

In terms of the separation region **8**, there may be electrophoretic, hybridization, or IEF functionalities, different filtrations, or other separation mechanisms, such as molecular sieving. Where the separation functionality is electrophoresis, the separation region **8** is preferably a capillary, as in Fig. 1. The separation region may contain an appropriate separation matrix such as a gel or other solution suitable for electrophoresis or IEF, as is known in the art. The solutions may include buffers, additives, polymeric agents, etc. In the preferred embodiment, the capillary tube **14** is between about .05 to 1.0 mm in diameter and 1-10 cm in length.

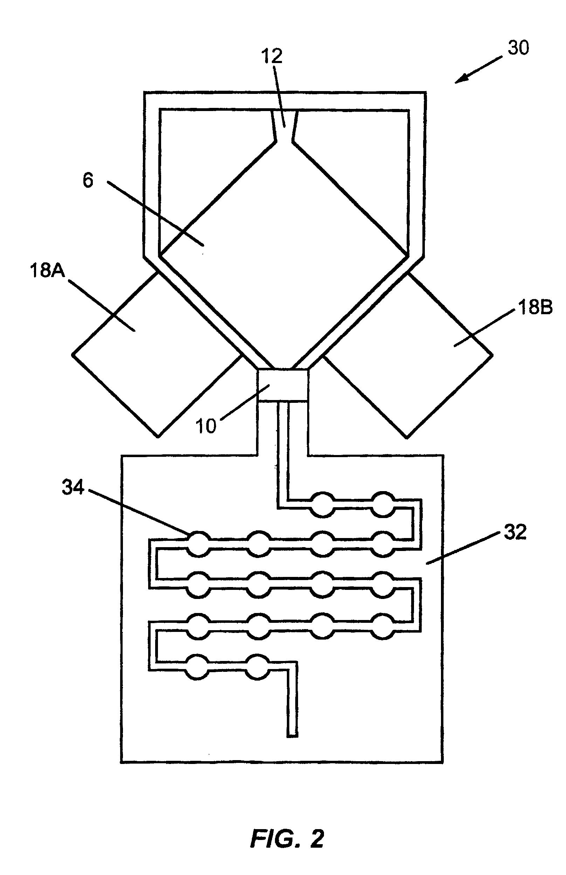

Fig. 2 shows another embodiment of a processing device **30** in which the separation region **32** is a hybridization region incorporating an array of nucleic acid hybridization sites **34**. Each hybridization site is preferably a channel or chamber coated with immobilized reagent such as polynucleotide probes. Immobilized reagent refers to reagent that is covalently or non-covalently attached to the surface of the structure. The immobilized reagent can be applied to the surface by a variety of methods well known in the art, e.g., dipping, inscribing with a pen, dispensing through a capillary tube or through the use of reagent jet-printing or any other suitable dispensing techniques.

Upon binding of the complementary analyte polynucleotide to the immobilized polynucleotide probe, a labeled probe, e.g., a fluorescent-labeled probe can be added to bind to the analyte polynucleotide. The amount of fluorescence is directly proportional to the amount of analyte in the test sample. Alternatively, the hybridization assay can be performed in a competitive format where a polynucleotide is conjugated to a detectable label. The polynucleotide labeled reagent competes with the analyte for binding to the immobilized polynucleotide. In another embodiment, the hybridization area comprises microstructure columns as described in co-pending application, U.S. Serial No. 09/115,454 filed July 14, 1998, the disclosure of which is incorporated by reference herein.

Other separation regions according to the present invention include ligand-binding sites in which members of a binding pair are located in the sites and couple to complementary binding pairs in the sample. In addition, the separation region may include selective filters such as molecular weight filters. Multiple functionalities may be located in one separation region. For example, electromotive separations such as electrophoresis may be combined with filters to pre-process certain samples where a mixture of protein background and nucleic acid is made to flow by electrical motive forces through a molecular weight cut-off filter, thereby filtering out the protein.

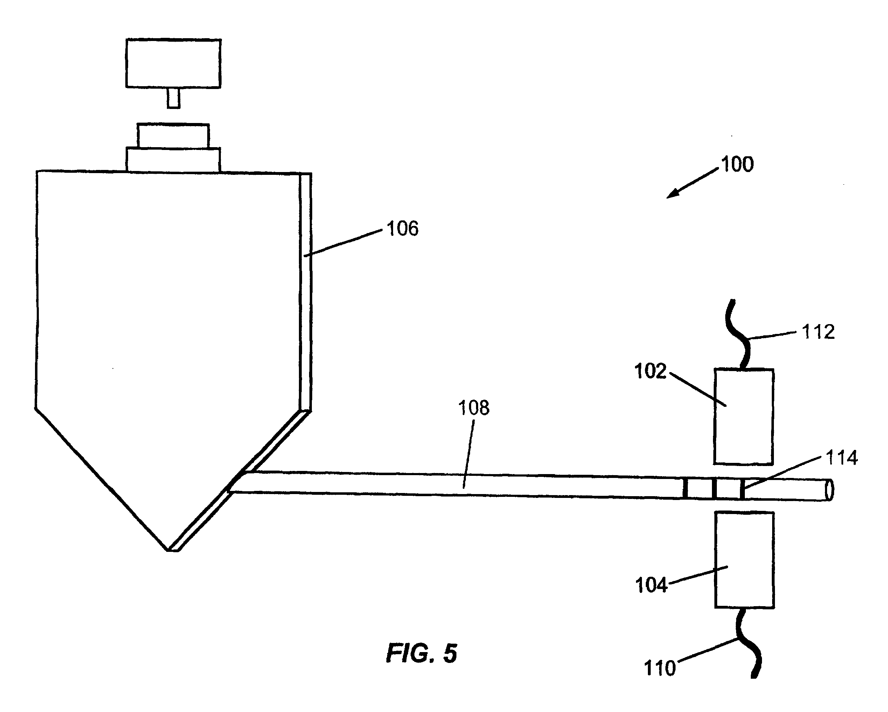

Flow between the reaction chamber and the separation region may be by differential pressure, hydrodynamic forces, electrical motive forces, capillary action, pneumatic forces, hydraulic forces, mechanical forces, etc. The unitary device may be coupled to instruments to actuate fluid flow such as pumps, vacuums, electrical connections, and the like. Electromotive mobility of molecules, and especially nucleic acids, as in isoelectric focus and electrophoretic mobility, is a convenient movement mechanism because of the predictability of movement. When conditions such as buffer ionic strength, channel dimensions, gel type and density, current density, voltage drop, time, etc. are constant, it is relatively easy to predict the location of molecules. Under controlled conditions, at time (T), the position of the analyte should be at position (X) consistently. This concept is illustrated in Fig. 5 in which site **114** denotes the location of the target.

For electrically motivated flow, a series of electrodes may be partially or fully embedded in the body of the device, or alternatively inserted prior to use. As shown in Fig. 1, electrodes **20, 22** may be actuated to induce fluid flow from the reaction chamber **6** to the separation region **8**, or from the separation region **8** to the reaction chamber **6**. Additionally, depending on the performance of the system and the requirements of the reaction chamber **6**, a common electrode (not shown) located in or proximal to the transition region **10** may be included to drive the separation procedures. Both sample injection and electrophoresis can be achieved by applying a voltage between electrodes. The voltage may be applied by a power source external to the device. Alternatively, a suitable power source may be integrated into the device.

Prior to use, the device may have electrodes that are dry, coated, or pre-contacted with electrolytic fluids. In order to use the device, the electrodes should be exposed to electrolytes. Dry electrodes may be made to contact solutions by injecting fluids into the electrode regions or by releasing pre-disposed fluids from connecting reservoirs. Where the electrodes are coated, the coating may be dissolved by various means, to allow the electrodes to contact the electrolytic solution. Furthermore, the timing in which the coating of particular electrodes is dissolved may be controlled to control the activation of each electrode and thus dictate the resulting electrically driven movement of fluids or components.

There are numerous advantages to embedding electrodes in the body of the device. Embedded electrodes facilitate reproducibility of electrode position in each device, to allow one to achieve reproducible results among several devices. In addition, embedded electrodes permit mass production of such devices resulting in decreased cost of manufacture. Moreover, the disposable, single use device of the present invention avoids issues of electrode contamination which may occur where electrodes are permanently secured in multiple use devices and in contact with conducting fluids for a long period of time.

The electrodes may be embedded into the unitary device with little additional cost by several techniques. First, metal electrodes can be situated inside a plastic injection molding production machine and "over-molded" during the injection molding process. Second, the metal electrodes may be selectively screen-printed, or otherwise deposited by plating, thin-film deposition, etc., and patterned on the unitary body of the device. For example, one end of a screen-printed metal line may be used to contact fluid in the device while the other end forms a connector which is electrically engaged by an external instrument. Both of these techniques, and other similar techniques are cost-effective and very suitable for high-volume production lines. The electrodes are preferably located near vents which allow the venting of gases generated during the application of the high electric fields associated with electrophoresis. The vent ports could be simple openings in the tube itself or gas permeable hydrophobic membranes such as Gore-Tex®.

Another aspect of the processing device according to the present invention is the fluid transition region between the reaction chamber and separation region. In some embodiments, the transition region may be a simple fluidic connection, *e.g*. a tube, between the reaction chamber and the separation region. In other embodiments, the transition region includes valves, fluid inlet ports, mixing regions, and the like. In each embodiment, the transition region has a fluid flow restrictor, such as a viscous matrix, a constrictor, fluidic capacitor, ports, and/or at least one valve, which may be a mechanical two-way or three-way valve. The fluid flow restrictor is used to control the flow of fluid between the reaction chamber and separation region.

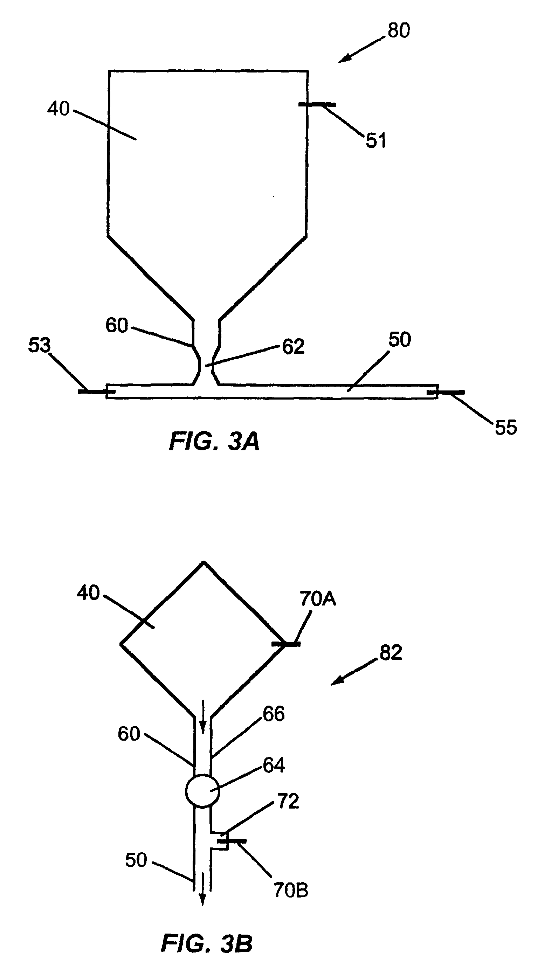

Figures 3A-E show several embodiments of an integrated device from the perspective of the transition region **60** between the reaction chamber **40** and separation region **50**. Fig. 3A shows a device **80** having a transition region **60** in which the flow restrictor is a constrictor **62**. The inner diameter of the constrictor **62** is very narrow compared to the preceding area, *e.g*., the reaction chamber **40**. The inner diameter of the constrictor **62** should be sufficiently small, preferably in the range of 0.01 to 1.0 mm, so that surface tension prevents the flow of fluid from the reaction chamber **40** to the separation region **50** until the electrodes **51, 53, 55** are activated.

Fig. 3B shows another exemplary device **82** having a two-way valve **64** located in transition region **60**. This valve **64** may be an on-off valve, such as a pinch-off valve, a membrane valve, or the like, to prevent fluid from flowing through the valve when in a closed position and to permit fluid flow when in an open position. Fluids may be allowed to collect in a collection area **66** just upstream of the valve **64**. In this manner, it may be possible to perform functions on the fluid sample prior to injection from the reaction chamber **40** into the separation region **50**. For example, the valve **64** may be closed during nucleic acid amplification reactions in the reaction chamber **40**, then opened just prior to sample injection into the separation region **50.** Furthermore, it may be desirable to return the valve to a closed position to stop fluid flow and thus allow only a plug of fluid to pass into the separation region **50.**

The valve **64** may also be used in the real-time monitoring of the processes occurring in the reaction chamber **40**. As the reaction proceeds in the reaction chamber, a sample of fluid may be allowed to pass through the valve **64** by opening and closing the valve at selective intervals during the course of the reaction process. The fluid flows into the separation region **50** for separation of components and detection of chemicals, thus indicating the status of the reaction process at any given time. The detection of the sample may indicate that the reaction procedure should be adjusted to optimize results. For example, where nucleic acid amplification is occurring in the reaction chamber **40**, if a low nucleic acid concentration is detected during the course of the amplification, the number of thermal cycles may be increased according to the desired outcome. Thus, a user of the device may avoid running too many or few cycles.

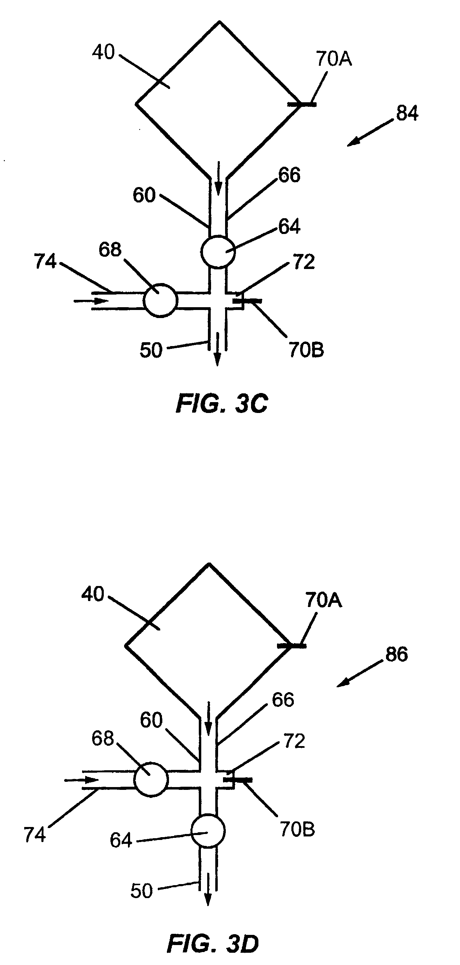

Electrodes positioned in the transition region and areas prior to the transition region, e.g., the reaction chamber 40, may facilitate movement of fluid into the transition region 60. Embedded electrodes **70A**, **70B** are shown by the form of the two-way valve configuration in Figure 3C. The electrode **70A** is embedded in the reaction region **40** and the second electrode **70B** is embedded in a channel **72** immediately downstream from the valve **64**. The electrodes **70A, 70B** protrude through the unitary body of the device to be partially exposed to the fluid inside of the chamber and channel.

The embodiments of the transition region **60** shown in Figs. 3C and 3D each include a combination of several two-way valves with a channel connected to the transition region. In these embodiments, a side valve **68** is located in a side channel **74** to control flow of fluids into the transition region **60**. For example, reagents and fluids may be added to or channeled away from the separation region **60** through the side channel **74**. These additional fluids may be injected prior to, during, or after the injection of the sample into the separation region **50**. Functions such as washing, incorporation of ampholines for isoelectric focusing in the separation region **50**, injection of markers, etc. may be utilized with such a channel and valve arrangement.

In the device **84** of Fig. 3C, the side channel **74** communicates with the transition region **60** downstream from the intermediary valve **64**. In the device **86** of Fig. 3D, the side channel **74** communicates with the transition region **60** in the collection section **66** located upstream from the intermediary valve **64**. In this embodiment, reagents may be allowed to interact with fluid in the collection section **66** prior to injecting the fluid into the separation region **50**. Also in the embodiments of Figs. 3C and 3D, the embedded common electrode **70B** is positioned in the transition region **60** opposite the side channel **74**. The common electrode **70B** may have several functions. The common electrode may either work with a side electrode (not shown) in the side channel **74** to induce fluid flow from the side channel. In addition, the common electrode **70B** may work with the injection electrode **70A** to facilitate fluid flow from the reaction chamber **40**.

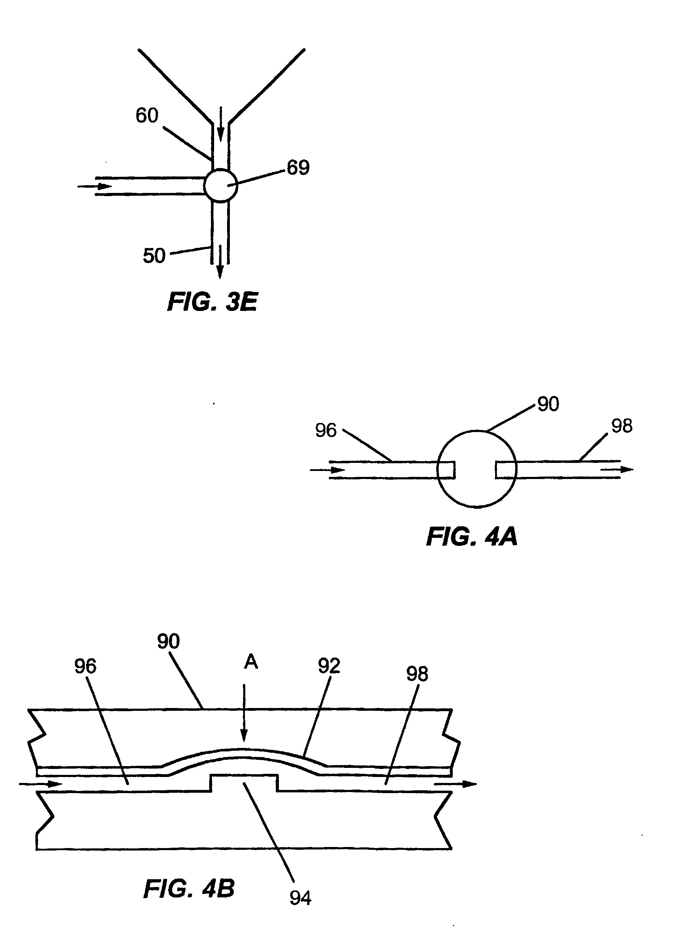

Further to the types of valves in the transition region of the device, the function of multiple, two-way valves may be realized through a single three-way valve. Fig. 3E shows a device **88** having a three-way valve **69** that allows injection of additional fluids, e.g. reagents, into the transition region **60** through the side channel **74**. A three-way valve or combination of two-way valves may also communicate with a concentration channel having a focusing gel and a common electrode. In this embodiment, a sample of chemicals flows into the channel to produce a fluid plug which may then be moved into the separation region.

An exemplary membrane valve is shown in plan view in Fig. 4A and cross-sectional view in Fig. 4B. The membrane valve **90** comprises a thin flexible polymer layer **92** that can be exposed to a force **A** to bias the layer **92** against a surface **94** to seal the fluidic path between two channels **96** and **98**. The valve **90** may then be released by removing the force **A**, causing the membrane to relax and permitting fluid to flow between the channels **96** and **98**. The force **A** which deflects the flexible membrane may be pneumatically, hydraulically, or a mechanically induced, for example by a mechanical plunger.

Referring again to Figs. 3A-3E, it is important that the transition region **60** thermally isolate the reaction chamber **40** from the separation region **50**. This thermal isolation enables proper heating of a sample in the reaction chamber **40** and prevents the degradation of material in the separation region **50**. The thermal isolation is achieved by making the transition region **60** thermally resistive, i.e., by ensuring that the transition region **60** has a lower thermal conduction than the reaction chamber **40**. The thermal conduction of the transition region **60** relates to both the conductivity of the material forming the transition region and the size of the transition region relative to the reaction chamber **40.** The present invention contemplates several methods for ensuring that the transition region **60** has a lower thermal conduction than the reaction chamber **40**. First, the portion of the body defining the transition region **60** is made narrower than the portion of the body forming the reaction chamber **40** so that the transition region **60** substantially thermally isolates the reaction chamber **40** from the separation region **50**. This is the presently preferred technique and is illustrated in the various embodiments of Fig. 1-3E. Second, the transition region **60** may comprise a different material having a lower thermal conductivity than the material forming the reaction chamber **40**. Third, thermal insulators, such as air pockets, may be formed in the body surrounding the transition region **60**. Of course, suitable combinations of these techniques may also be employed.

One or more optical assemblies may communicate with the reaction chamber, separation region and/or other areas of the device. The optical assemblies may be externally coupled to the device and preferably include solid-state components, such as photodiodes and LEDs. As shown in Fig. 5, a device **100** includes a light source **102**, such as an LED, and an optical detector **104**, such as a lens, optical filter, and photodiode. Light source **102** and detector **104** are positioned to detect separated components, *e.g*. nucleic acid fragments, of the sample in the electrophoresis capillary **108**. The nucleic acid fragments may be detected when stained with an intercalating dye such as ethidium bromide. An example of this format provides for ethidium bromide being added from a side channel (not shown) via electromotive forces of electrodes. The light source **102** is coupled to a controller by a connector **112** and data is received by the controller from detector **104** through a connector **110**. The controller may comprise one or more microprocessors or microcontrollers for controlling operations such as fluid flow actuation, optics, detection, etc.

Alternatively, the optical detection system may comprise a laser and CCD. In this embodiment, the optical detection arrangement preferably includes an optical filter, such as an interference filter or band pass filter for passing the detection wavelength of interest, a CCD, focusing optics, a reflector/splitter, and an Argon ion laser. The operation is as follows: The laser excites the fluorescent indicator dye associated with product detection. The fluorescent signal is monitored by the CCD and passed to the controller. Alternatively, an LED may be used to excite the fluorescent indicator dye. Absorption spectroscopy could similarly be used.

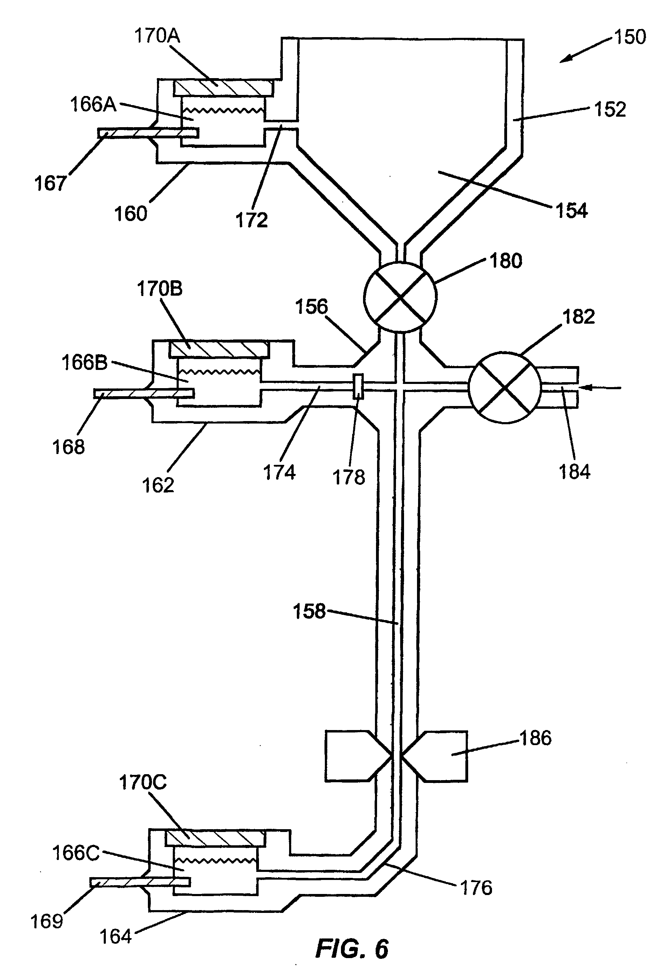

Fig. 6 illustrates another embodiment of the present invention in which a processing device **150** includes electrode regions **160, 162** and **164**. Each electrode region includes a respective reservoir **166A, 166B, 166C** for storing electrophoretically transported fluid. Each of the electrode regions also has a respective electrode **167, 168** and **169** embedded in the body **152** of the device. Each electrode protrudes through the body **152** to be partially immersed inside of a reservoir. Each reservoir further has a respective membrane **170A, 170B,** and **170C** to vent gases. The membranes may be made of Gore-Tex® or other convenient hydrophobic porous materials.

The first electrode region **160** is connected to a reaction chamber **154** by a channel **172**. Similarly, the second electrode region **162** is connected to a transition region **156** by a channel **174**. The channel **174** further includes a filter **178**, preferably a high molecular weight filter, to allow only selected molecular components to pass. The third electrode region **164** is attached to the terminal end of a separation region **158** by a channel **176**. A valve **180** in transition region **156** controls fluid flow from the reaction chamber **154** and a valve **182** controls cross-flow of fluid through a side channel **184**. In a preferred embodiment, the device **150** is used for nucleic acid analysis and the reaction chamber **154** is a nucleic acid amplification chamber.

### Examples of Operation

The present invention further contemplates particular methods for using various embodiments of the reaction and separation device described above.

### 1. Method for using an electrophoresis device of the present invention:

i) an unknown sample is mixed with the appropriate PCR, for example, mastermix solution and introduced into the reaction chamber portion of the analysis system;
ii) a PCR reaction sequence (or other DNA amplification technique or chemical reaction) is performed on the solution inside the reaction chamber;
iii) optical monitoring of the reaction products inside the chamber is performed to track the progress of the amplification reaction;
iv) when it is determined that sufficient product, such as nucleic acid, has been generated inside the reaction chamber, the injection and common electrodes are activated, drawing a sample plug through the transition region into the top portion of the separation region, e.g., an electrophoresis tube containing a suitable gel. This electrophoretic injection step can be completed within a very short time, thereby minimizing the generation of bubbles within the reaction chamber;
v) the common and electrophoresis electrodes are activated, causing the sample plug to drift through the gel and down the hollow separation tube;
vi) as the separated bands of molecules traverse the length of the tube, they pass by the optical detection system and data representing the product is determined.

### 2. Method of using the electrophoresis device shown in Figure 6:

i) the sample and appropriate reagents are subjected to a nucleic acid amplification process in the reaction chamber **154**, while valves **180** and **182** are closed;
ii) optical monitoring of the reaction products inside the chamber **154** is performed to track the progress of the amplification reaction;
iii) while valve **180** is closed, valve **182** is opened and an appropriate buffer solution is injected into the separation column or capillary **158** through the inlet port **184**;
iv) an appropriate electrophoresis voltage is applied between electrodes **167** and **168** while valve **180** is opened and valve **182** is closed. During this phase, high molecular weight species are collected on the high molecular weight filter **178**;
v) an appropriate electrophoresis voltage is then applied between electrodes **168** and **169**, while valves **180** and **182** are closed. During this phase, the high molecular weight species collected on the filter **178** are electrophoretically transported down the separation capillary **158;**
vi) as the captured molecular species are electrophoretically transported down the capillary **158**, they reach the optical detector **186** and are detected by optical fluorescence.

### 3. Method of using a device with a hybridization region and three-way valve:

i) steps i) to iii) in Example 1 are performed on a sample;
ii) a first three-way valve in the transition region is opened to allow the reaction mixture to flow under hydrodynamic force from the reaction chamber, through the valve, through a hybridization region (first separation region), through a second three-way valve, and into a connected waste area. As the fluid flows through the hybridization region, target molecules in the sample hybridize to capture ligands or probes covalently bound to the surface of the hybridization region;
iii) the first three-way valve is switched to allow a reagent to flow hydrodynamically from a reagent access channel, through the first three-way valve, through the hybridization region, through the second three-way valve, and into the waste area. Reporter molecules or probes hybridize or bind to any target molecules captured in the prior step ii);
iv) a wash solution is introduced into the reagent access channel and flows through the hybridization region, through the second three-way valve and into the waste;
v) an elution solution is introduced into the reagent access channel and flows through the first three-way valve and into the hybridization region until the region is filled, at which time flow is stopped for a selected period of time;
vi) the second three-way valve switches to connect the hybridization area and a second access channel to a second separation region;
vii) the elution solution with the target molecules is eluted from the hybridization surface by chemical, thermal or electrical means;
viii) the elution solution with the target molecules resumes flow through the second three-way valve at the same time that a reagent is added through the second access channel where the elution and reagent meet and flow together into the second separation region;
ix) electrodes in communication with the second separation region are activated causing the target molecules to separate and migrate to their pI location;
x) a CCD camera optically images the entire length of the second separation channel to provide a barcode-like result.

### 4. Method of using a device with a hybridization region, electrophoresis region and three-way valve:

i) steps i) to vii) in Example 3 are performed on a sample;
ii) the elution solution with the target molecules resume flow through the second three-way valve;
iii) electrodes in communication with the second separation region are activated causing the elution solution with target molecules to flow into the separation region and the target molecules to separate in the matrix located in the second separation region;
iv) a CCD camera optically images the entire length of the second separation channel to provide a barcode-like result.

### Fabrication

The devices of the present invention may for example be produced by injection molding, casting, machining or other convenient means of making a one-piece body without bonding multiple pieces together. Molding allows for formation of a contiguous reaction chamber, transition region, and separation region. Valve structures may also be included in the mold, or in the alternative, added to device after the unitary body is molded.

Although a one-piece body has been described, a device of the present invention may also be produced by sealing or laminating one or more plastic films to a molded polymeric part. For example, the body of the device may comprise a molded polymeric part having the reaction chamber, transition region, and separation region formed therein and first and second plastic films sealed to opposite sides of the molded polymeric part to enclose the reaction chamber, transition region, and/or separation region. To aid in the transfer of energy to the sample components or to aid in optical detection of the components, it is preferred that the plastic films be relatively thin, e.g., that the films each have a thickness in the range of 0.01 to 0.5 mm, and more preferably have a thickness of about 0.05 mm.

The integrated devices of the present invention are preferably made of any number of polymeric materials. Included among these are, but not intended to be limited to, polyolefins such as polypropylene and polyethylene, polyesters such as polyethylene terephthalate, styrene containing polymers such as polystyrene, styreneacrylonitrile, and acrylonitrilebutadienestyrene, polycarbonate, acrylic polymers such as polymethylmethacrylate and poly acrylonitrile, chlorine containing polymers such as polyvinylchloride and polyvinylidenechloride, acetal homopolymers and copolymers, cellulosics and their esters, cellulose nitrate, fluorine containing polymers such as polyvinylidenefluoride, polytetrafluoroethylene, polyamides, polyimides, polyetheretherketone, sulfur containing polymers such as polyphenylenesulfide and polyethersulfone, polyurethanes, silicon containing polymers such as polydimethylsiloxane. In addition, the structures can be made from copolymers, blends and/or laminates of the above materials, as well as glass and ceramic materials.

Furthermore, electrodes may be "overmolded" by partially inserting electrodes at their selected locations into the mold such that the electrodes become embedded in the unitary body after the material is added to the mold and allowed to solidify. The electrodes may be made of platinum, silver, carbon, gold or any other suitable electrically conductive material. Other components may be optionally overmolded to the device in a similar fashion.

In the alternative, after the unitary body is formed, electrodes, filters, resistive heating elements, etc. may be embedded into the body using screen-printing or thin-film depositing techniques. Reagents, matrices or fluids may be injected into various reservoirs and channels of the formed body. Furthermore, the device may include components external to the unitary body, such as optics, electrical connections to the electrodes, heater(s) embedded in the body, pneumatic interfaces to pumps or vacuums, etc. Alternatively, such components may be located in an external instrument into which the unitary device is placed for sample processing, as described above.

To summarize, the entire assembly of the reaction chamber, transition region, and separation region may be formed in a single, unitary, disposable body. There are a number of reasons why the device of the present invention is much improved over prior implementations.
1) the entire device is disposable, so that sample carry-over and contamination from sample to sample is not a problem;
2) all major elements of the device are integrated into one analytical component; it is not necessary to transfer the sample or the reaction products from one device having a reaction chamber to a separate device having a separation tube;
3) provision is made for thermally isolating the reaction chamber from the separation region, thereby ensuring proper heating of a sample and operability of the separation region;
4) provision is made for optical detection both in the reaction chamber as well as the separation tube;
5) provision is made for venting and otherwise dealing with the gases generated during electrophoresis or during isoelectric focusing;
6) the inconvenience of bonding techniques to connect substrates and modules is avoided; and
7) embedded electrodes provide for reproducibility and low cost mass production.

The present invention has been described above in varied detail by reference to the particular embodiments and figures. It is to be understood that modifications or substitutions may be made to the devices and methods described based upon this disclosure without departing from the broad scope of the invention. Therefore, the scope of the invention should be determined by the following claims and their legal equivalents.

## Claims

1. A device for analyzing a sample, the device comprising:
a) a body having:
i) a reaction chamber for chemically reacting the sample;
ii) a separation channel for separating components of the sample;
iii) a transition region connecting the reaction chamber to the separation channel, wherein the thermal conduction of the transition region is sufficiently low so that the transition region substantially thermally isolates the reaction chamber from the separation channel; and
iv) at least one valve in the transition region for controlling fluid flow between the reaction chamber and the separation channel; and
b) at least two electrodes coupled to the body, the electrodes being positioned to induce electrophoretic flow, electroosmotic flow, or isoelectric focusing of the sample components in the separation channel when a voltage difference is applied between the electrodes.

2. The device of claim 1, wherein the body further includes:
a side channel connected to the transition region for adding or removing fluid from the transition region; and
at least a second valve for controlling fluid flow through the side channel.

3. The device of claim 2, wherein the valves comprise membrane valves, and wherein the device is in combination with and designed to be inserted into an instrument having means for controlling the membrane valves.

4. The device of claim 3, wherein the instrument pneumatically controls the membrane valves.

5. The device of claim 1 or 2, wherein the device is in combination with and designed to be inserted into an instrument having a heater for heating the reaction chamber and having electrical connections for applying the voltage difference between the electrodes.

6. The device of claim 1 or 2, wherein the electrodes are positioned to induce the sample components to separate into bands in the separation channel when the voltage difference is applied, and wherein the device is in combination with and designed to be inserted into an instrument having electrical connections for applying the voltage difference and having at least one light source and detector for detecting the sample components in the separation channel.

7. The device of claim 6, wherein the instrument includes additional optics for monitoring the reaction chamber.

8. The device according to any one of the precending claims, wherein the separation channel comprises an electrophoresis or IEF channel containing separation material.

9. The device according to any one of the precending claims, wherein the body has a first reservoir fluidicly connected to a first end of the separation channel and a second reservoir fluidicly connected to a second end of the separation channel, and wherein the at least two electrodes comprise:
i) a first electrode coupled to the body such that the first electrode is at least partially immersed in the first reservoir; and
ii) a second electrode coupled to the body such that the second electrode is at least partially immersed in the second reservoir.

10. The device according to any one of claims 1 to 8, wherein each of the electrodes is embedded in the body such that one end of the electrode protrudes through an external surface of the body and such that the other end of the electrode protrudes into an internal region of the body.

11. The device according to any one of the precending claims, wherein the body comprises a polymeric material, and wherein the electrodes are over-molded in the body.

12. The device according to any one of claims 1 to 9, wherein the electrodes are screen-printed on the body.

13. The device of claim 2, wherein the side channel connects to the transition region upstream from the first valve.

14. The device of claim 2, wherein the side channel connects to the transition region downstream from the first valve.

15. The device of claim 1, wherein the device includes at least three electrodes, the first electrode being coupled to the body adjacent the reaction chamber, the second electrode being coupled to the body adjacent the transition region, and the third electrode being coupled to the body adjacent the separation region so that when a first voltage is applied between the first and second electrodes, the sample components are transported from the reaction chamber to the transition region, and so that when a second voltage is applied between the second and third electrodes, the electrophoretic flow, electroosmotic flow, or isoelectric focusing of the sample components in the separation channel is induced.

16. The device of claim 15, further comprising a molecular weight filter for filtering species in the sample having a sufficiently high molecular weight, the filter being positioned in a channel between the second electrode and the transition region such that when the first voltage is applied between the first and second electrodes, the species are transported from the reaction chamber and collected on the filter, and such that when the second voltage is applied between the second and third electrodes, the species collected on the filter are transported into the separation region.

## Patentansprüche

1. Einrichtung zum Analysieren einer Probe, welche Einrichtung folgendes aufweist:
a) einen Körper mit:
i) einer Reaktionskammer zum chemischen Reagierenlassen der Probe;
ii) einem Separationskanal zum Separieren von Komponenten der Probe;
iii) einem Übergangsbereich, der die Reaktionskammer mit dem Separationskanal verbindet, wobei die thermische Leitfähigkeit des Übergangsbereichs ausreichend gering ist, so dss der Übergangsbereich die Reaktionskammer von dem Separationskanal im wesentlichen thermisch isoliert; und
iv) zumindest einem Ventil in dem Übergangsbereich zum Steuern des Fluidstroms zwischen der Reaktionskammer und dem Separationskanal; und
b) zumindest zwei mit dem Körper verbundene Elektroden, die so positioniert sind, dass sie einen elektrophoretischen Strom, einen elektroosmotischen Strom oder ein isoelektrisches Fokussieren der Probenkomponenten in dem Separationskanal induzieren, wenn ein Spannungsunterschied zwischen den Elektroden aufgebracht wird.

2. Einrichtung nach Anspruch 1, wobei der Körper außerdem einen mit dem Übergangsbereich verbundenen Seitenkanal zum Einbringen von Fluid in den oder Entfernen von Fluid aus dem Übergangsbereich beinhaltet sowie zumindest ein zweites Ventil zum Steuern des Fluidstroms durch den Seitenkanal hindurch.

3. Einrichtung nach Anspruch 2, wobei die Ventile Membranventile sind und die Einrichtung mit einem Instrument kombiniert und darin einführbar ist, das Mittel zum Steuern der Membranventile hat.

4. Einrichtung nach Anspruch 3, wobei das Instrument die Membranventile pneumatisch steuert.

5. Einrichtung nach Anspruch 1 oder 2, wobei die Einrichtung mit einem Instrument kombiniert und darin einsetzbar ist, das einen Heizer zum Heizen der Reaktionskammer hat sowie elektrische Anschlüsse zum Anlegen der Spannungsdifferenz zwischen den Elektroden.

6. Einrichtung nach Anspruch 1 oder 2, wobei die Elektroden so positioniert sind, dass sie die Probenkomponenten so induzieren, dass sie sich in dem Separationskanal in Bänder auftrennen, wenn die Spannungsdifferenz angelegt wird, und wobei die Einrichtung mit einem Instrument kombiniert und darin einsetzbar ist, das einen elektrischen Anschluss zum Anlegen der Spannungsdifferenz hat und zumindest eine Lichtquelle und einen Detektor zum Erfassen der Probenkomponenten in den Separationskammern.

7. Einrichtung nach Anspruch 6, wobei das Instrument eine zusätzliche Optik zum Überwachen der Reaktionskammer beinhaltet.

8. Einrichtung nach einem der vorangehenden Ansprüche, wobei der Separationskanal einen Elektrophorese- oder IEF-Kanal mit einem Separationsmaterial aufweist.

9. Einrichtung nach einem der vorangehenden Ansprüche, wobei der Körper ein erstes Reservoir hat, das in Fluidverbindung mit einem ersten Ende des Separationskanals steht, und ein zweites Reservoir, das in Fluidverbindung mit einem zweiten Ende des Separationskanals steht, und wobei die zumindest zwei Elektroden folgendes beinhalten:
i) eine erste Elektrode, die mit dem Körper so verbunden ist, dass sie zumindest teilweise in das erste Reservoir eingetaucht ist; und
ii) eine zweite Elektrode, die mit dem Körper so verbunden ist, dass sie zumindest teilweise in das zweite Reservoir eingetaucht ist.

10. Einrichtung nach einem der Ansprüche 1 bis 8, wobei jede Elektrode in dem Körper so eingebettet ist, dass ein Ende der Elektrode durch eine äußere Oberfläche des Körpers hindurch hervorsteht und das andere Ende der Elektrode in einen inneren Bereich des Körpers hinein hervorsteht.

11. Einrichtung nach einem der vorangehenden Ansprüche, wobei der Körper ein polymerisches Material aufweist und die Elektroden in dem Körper übergeformt sind.

12. Einrichtung nach einem der Ansprüche 1 bis 9, wobei die Elektroden auf dem Körper siebgedruckt sind.

13. Einrichtung nach Anspruch 2, wobei der Seitenkanal stromaufwärts des ersten Ventils mit dem Übergangsbereich verbunden ist.

14. Einrichtung nach Anspruch 2, wobei der Seitenkanal stromabwärts des ersten Ventils mit dem Übergangsbereich verbunden ist.

15. Einrichtung nach Anspruch 1, wobei die Einrichtung zumindest drei Elektroden beinhaltet, wobei die erste mit dem Körper angrenzend an die Reaktionskammer verbunden ist, die zweite mit dem Körper angrenzend an den Übergangsbereich verbunden ist und die dritte mit dem Körper angrenzend an den Separationsbereich verbunden ist, so dass, wenn eine erste Spannung zwischen der ersten und der zweiten Elektrode angelegt wird, die Probenkomponenten von der Reaktionskammer zu dem Übergangsbereich gebracht werden, und wenn eine zweite Spannung zwischen der zweiten und der dritten Elektrode angelegt wird, der elektrophoretische Strom, der elektroosmotische Strom oder das isoelektrische Fokussieren der Probenkomponenten in dem Separationskanal induziert wird.

16. Einrichtung nach Anspruch 15, weiter mit einem Molekulargewichtsfilter zum Filtern von Spezies in der Probe, die ein ausreichend hohes Molekulargewicht haben, welcher Filter in einem Kanal zwischen der zweiten Elektrode und dem Übergangsbereich so vorgesehen ist, dass, wenn die erste Spannung zwischen der ersten und der zweiten Elektrode angelegt wird, die Spezies von der Reaktionskammer transportiert werden und sich an dem Filter sammeln, und wenn die zweite Spannung zwischen der zweiten und der dritten Elektrode angelegt wird, die an dem Filter gesammelten Spezies in den Separationsbereich transportiert werden.

## Revendications

1. Dispositif pour analyser un échantillon, le dispositif comprenant :
a) un corps ayant :
i) une chambre de réaction pour faire réagir chimiquement l'échantillon ;
ii) un canal de séparation pour séparer des composants de l'échantillon ;
iii) une région de transition reliant la chambre de réaction au canal de séparation, dans laquelle la conduction thermique de la région de transition est suffisamment basse pour que la région de transition isole sensiblement thermiquement la chambre de réaction du canal de séparation ; et
iv) au moins une vanne dans la région de transition pour commander la circulation du fluide entre la chambre de réaction et le canal de séparation ; et
b) au moins deux électrodes couplées au corps, les électrodes étant positionnées pour induire une circulation électrophorétique, une circulation électroosmotique, ou une focalisation isoélectrique des composants de l'échantillon dans le canal de séparation quand une différence de tension est appliquée entre les électrodes.

2. Dispositif selon la revendication 1, dans lequel le corps comprend de plus :
un canal latéral relié à la région de transition pour ajouter ou enlever du fluide à partir de la région de transition ; et
au moins une deuxième vanne pour commander la circulation du fluide à travers le canal latéral.

3. Dispositif selon la revendication 2, dans lequel les vannes comprennent des vannes à membrane, et dans lequel le dispositif est en association avec et est conçu pour être inséré dans un instrument ayant des moyens de commander les vannes à membrane.

4. Dispositif selon la revendication 3, dans lequel l'instrument commande d'une manière pneumatique les vannes à membrane.

5. Dispositif selon l'une quelconque des revendications 1 ou 2, dans lequel le dispositif est en association avec et est conçu pour être inséré dans un instrument ayant un élément de chauffage pour chauffer la chambre de réaction et ayant des connexions électriques pour appliquer la différence de tension entre les électrodes.

6. Dispositif selon l'une quelconque des revendications 1 ou 2, dans lequel les électrodes sont positionnées pour induire les composants de l'échantillon à se séparer en bandes dans le canal de séparation quand la différence de tension est appliquée, et dans lequel le dispositif est en association avec et est conçu pour être inséré dans un instrument ayant des connexions électriques pour appliquer la différence de tension et ayant au moins une source de lumière et un détecteur pour détecter les composants de l'échantillon dans le canal de séparation.

7. Dispositif selon la revendication 6, dans lequel l'instrument comprend une optique supplémentaire pour surveiller la chambre de réaction.

8. Dispositif selon l'une quelconque des revendications précédentes, dans lequel le canal de séparation comprend un canal d'électrophorèse ou d'IEF contenant le matériau de séparation.

9. Dispositif selon l'une quelconque des revendications précédentes, dans lequel le corps possède un premier réservoir relié de manière fluidique à une première extrémité du canal de séparation, et un second réservoir relié de manière fluidique à une seconde extrémité du canal de séparation, et dans lequel les au moins deux électrodes comprennent :
i) une première électrode couplée au corps de telle sorte que la première électrode est immergée au moins partiellement dans le premier réservoir ; et
i) une seconde électrode couplée au corps de telle sorte que la seconde électrode est immergée au moins partiellement dans le second réservoir.

10. Dispositif selon l'une quelconque des revendications 1 à 8, dans lequel chacune des électrodes est incorporée dans le corps de telle sorte qu'une extrémité de l'électrode fait saillie à travers une surface extérieure du corps et de telle sorte que l'autre extrémité de l'électrode fait saillie dans une région intérieure du corps.

11. Dispositif selon l'une quelconque des revendications précédentes, dans lequel le corps comprend un matériau polymère, et dans lequel les électrodes sont surmoulées dans le corps.

12. Dispositif selon l'une quelconque des revendications 1 à 9, dans lequel les électrodes sont sérigraphiées sur le corps.

13. Dispositif selon la revendication 2, dans lequel le canal latéral est relié à la région de transition en amont de la première vanne.

14. Dispositif selon la revendication 2, dans lequel le canal latéral est relié à la région de transition en aval de la première vanne.

15. Dispositif selon la revendication 1, dans lequel le dispositif comprend au moins trois électrodes, la première électrode étant couplée au corps adjacent à la chambre de réaction, la deuxième électrode étant couplée au corps adjacent à la région de transition, et la troisième électrode étant couplée au corps adjacent à la région de séparation de telle sorte que quand une première tension est appliquée entre les première et deuxième électrodes, les composants de l'échantillon sont transportés à partir de la chambre de réaction jusqu'à la région de transition, et de telle sorte que quand une seconde tension est appliquée entre les deuxième et troisième électrodes, la circulation électrophorétique, la circulation électroosmotique, ou la focalisation isoélectrique des composants de l'échantillon dans le canal de séparation est induite.

16. Dispositif selon la revendication 15, comprenant de plus un filtre de poids moléculaire pour filtrer les espèces de l'échantillon ayant un poids moléculaire suffisamment élevé, le filtre étant positionné dans un canal situé entre la deuxième électrode et la région de transition de telle sorte que quand la première tension est appliquée entre les première et deuxième électrodes, les espèces sont transportées à partir de la chambre de réaction et recueillies sur le filtre, et de telle sorte que quand la seconde tension est appliquée entre les deuxième et troisième électrodes, les espèces recueillies sur le filtre sont transportées dans la région de séparation.
